# EUROPÄISCHE PATENTSCHRIFT

(11) **EP 0 596 376 B1**
(45) Veröffentlichungstag und Bekanntmachung des Hinweises auf die Patenterteilung: **28.01.1998**
(21) Anmeldenummer: 93117286.0
(22) Anmeldetag: 26.10.1993
(51) Int. Cl.: B65D 88/70

(54) **Luftkanone zur Beseitigung von Schüttgutanbackungen und -stauungen**
Air gun for removing bulk material adhering and accumulating
Canon à air pour éliminer de la matière adhérente et accumulée

(30) Priorität: 31.10.1992 DE 4236896
(43) Veröffentlichungstag der Anmeldung: 11.05.1994
(73) Patentinhaber: Maury, Hans-Dietmar Dr.rer.nat., D-59227 Ahlen (DE)
(72) Erfinder: Maury, Hans-Dietmar Dr.rer.nat., D-59227 Ahlen (DE)
(74) Vertreter: Stenger, Watzke & Ring Patentanwälte

(56) Entgegenhaltungen:
- EP-A- 0 066 795
- EP-A- 0 324 368
- AU-A- 586 090
- DE-A- 2 000 808
- US-A- 3 915 339

## Beschreibung

Die Erfindung betrifft eine Luftkanone zur Beseitigung von Schüttgutanbackungen und -stauungen in Silos, Wärmetauschern, Leitungen und dgl. mit Hilfe von Luftstößen, mit einem Druckbehälter zum Speichern von komprimierter Luft, einer Ausströmdüse sowie einem zwischen dem Druckbehälter und der Ausströmdüse angeordneten Auslaßventil für die komprimierte Luft, wobei das Auslaßventil ein Ventilgehäuse sowie einen in einer Führung längs geführten, rückseitig von einem schlagartig absenkbaren Schließdruck beaufschlagten Kolben aufweist, der an seiner der Ausströmdüse zugewandten Vorderseite eine ringförmige Ventildichtfläche aufweist, innerhalb welcher bei geschlossenem Auslaßventil der Druck in der Ausströmdüse und außerhalb welcher der im Druckbehälter herrschende Druck wirkt.

Luftkanonen sind Vorrichtungen zur Erzeugung impulsartiger Luftstöße hoher Energiedichte. Diese Luftstöße werden dazu verwendet, Anbackungen oder Stauungen von Schüttgut in Silos, Wärmetauschern, Leitungen von verfahrenstechnischen Anlagen, Zyklonen, Ofeneinläufen und dgl. in periodischen Zeitabständen oder je nach Bedarf zu beseitigen. Hierzu wird in einem Druckbehälter komprimierte Druckluft über ein Auslaßventil mit großflächigem Austrittsquerschnitt schlagartig freigegeben und expandiert. Durch die hierbei freiwerdende Druckenergie lösen sich die Schüttgutanbackungen in den betreffenden Anlagen bzw. Anlagenteilen.

Von entscheidender Bedeutung für die Größe des mit derartigen Luftkanonen erreichbaren Luftimpulses ist die Dimensionierung sowie die Gestaltung des verwendeten Auslaßventiles. So ist aus der EP-A-0 134 726 eine Luftkanone bekannt, bei welcher das Auslaßventil eine Baueinheit bildet, bei der die von dem Druckbehälter zu dem Auslaßventil führende Einlaßleitung orthogonal zu der Ausströmdüse angeordnet ist, wodurch allerdings bei geöffnetem Auslaßventil für die ausströmende Luft erhebliche Strömungs- und Drosselverluste entstehen. Entsprechende Nachteile gelten auch für die Ausbildung und Führung des Ventilkörpers, welcher praktisch als Ventilteller mit einem Außenkragen und einem Innenkragen ausgebildet ist. Mit dem Innenkragen setzt das Ventilteil in seiner Schließstellung auf dem ringförmig gestalteten Ventilsitz der Ausströmdüse auf, wahrend der Außenkragen zur Führung des Ventilteils in dem Ventilgehäuse dient. Dieses bekannte Auslaßventil erzwingt eine Luftströmung, bei der die Luft einmal um 90° und anschließend, beim Eintreten in die Ausströmdüse, um 180° umgelenkt wird.

Eine weiterentwickelte Luftkanone gemäß dem Oberbegriff des Anspruchs 1 ist aus der DE-A-36 02 207 bekannt. Auch bei dieser Luftkanone wird die Ventilsitzfläche durch das Ende eines Ausströmrohres gebildet, wobei sich dieses Rohrende allerdings in etwa in Höhe der Mittelachse der zum Druckbehälter führenden Zuströmleitung befindet. Auf diese Weise wird ein Großteil der bei geöffnetem Auslaßventil zu dem Ausströmrohr strömenden Druckluft nur einmal um 90° umgelenkt. Da allerdings auch bei dieser Konstruktion das Ausströmrohr teilweise in die Zuströmleitung ragt, treten gleichwohl im Bereich der kragenförmig gestalteten Ventilsitzfläche unerwünschte Strömungs- und damit Druckverluste auf.

Eine weiterentwickelte Luftkanone ist aus der Firmendruckschrift "Luftstoßgeräte: Sicherer Betrieb und zuverlässige Funktion" der Agrichema Materialflußtechnik GmbH bekannt. Darin ist ein innerhalb des Druckbehälters angeordnetes Auslaßventil beschrieben, dessen ringförmige Ventildichtfläche radial von der komprimierten Luft angeströmt wird, so daß sich zwar ebenfalls eine Umlenkung der Strömung um 90° ergibt, allerdings unter Vermeidung des bei den vorgenannten Konstruktionen erforderlichen Kragens des Ausströmrohres. Allerdings erfolgt die Ausströmung bei diesem bekannten Auslaßventil nicht über den gesamten Ventilquerschnitt in gleichmäßiger Weise, sondern es sind über den Umfang der Ventildichtfläche mehrere Ausblasöffnungen mit jeweils dazwischen angeordneten Stegen angeordnet. Die Stege sind als Verlängerung des Ventilgehäuses des Auslaßventils ausgebildet und verbinden das Ventilgehäuse mit dem Ventilsitz. Strömungstechnisch sind diese Stege äußerst ungünstig, da sie quer zur Strömungsrichtung angeordnete Flächen bilden, die zu einem erheblichen Druckverlust und damit einer Schwächung des erreichbaren Luftimpulses führen. Außerdem hat die Anordnung des Auslaßventiles innerhalb des Druckbehälters Nachteile hinsichtliche der Kontrolle und Wartung des Gerätes. in diesem Zusammenhang ist von Bedeutung, daß derartige Druckbehälter der jeweils gültigen Druckbehälter-Verordnung unterliegen und daher nicht ohne weiteres geöffnet werden dürfen.

Der Erfindung liegt die **Aufgabe** zugrunde, eine Luftkanone zur Beseitigung von Schüttgutanbackungen und -stauungen zu schaffen, die einfach aufgebaut ist und die einen besonders impulsstarken Luftstoß erzeugt.

Zur **Lösung** wird eine Luftkanone mit den Merkmalen des Anspruchs 1 vorgeschlagen.

Bei einer solchen Luftkanone kann die komprimierte Luft ohne die Überwindung von Einbauhindernissen in die Ausströmdüse gelangen. Da die Mündung des Ringkanals die Form einer vollständig zylindrischen Öffnung aufweist, ist eine allseitige Zuströmung der Druckluft in die zentral angeordnete Ausströmdüse möglich. Da die Zufuhr der Druckluft über einen zwischen dem Ventilgehäuse und der Führung für den Kolben angeordneten Ringkanal erfolgt, ist nicht nur die allseitige Zuströmung zum Ventilsitz sichergestellt, sondern diese Zuströmung erfolgt bereits vor Erreichen des Ventilsitzes in einer über den gesamten Umfang nahezu gleichförmigen Art und Weise. Da auf diese Weise Strömungsverluste vermieden werden, läßt sich mit dieser Luftkanone die in dem Druckbehälter komprimierte Luft in kürzestmöglicher Zeit expandieren. Es wird also ein besonders impulsstarker Luftstoß erzeugt.

Die Führung für den Kolben ist in einem Kolbengehäuse ausgebildet, welches vorzugsweise innerhalb des Ventilgehäuses einen nahezu symmetrisch angeordneten Strömungskörper bildet. Auch hierdurch wird eine Vergleichmäßigung der Strömung über den Umfang des Auslaßventiles erreicht. Außerdem wird durch diese Ausbildung und Anordnung des Kolbengehäuses innerhalb des Ventilgehäuses der als "Strömungstechnisches Paradoxon" bekannte Effekt ausgenutzt, demzufolge bei entsprechender Ausbildung eines Strömungskörpers die Kraft des auf der Anströmseite wirkenden Staudrucks in etwa gleich ist der Kraft, die sich am strömungsabgewandten Ende infolge des dort herrschenden dynamischen Druckes einstellt. Ein solcher Strömungskörper verhält sich im Idealfall widerstandslos innerhalb der Strömung.

Das Kolbengehäuse ist über radiale Stützstege und unter Wahrung des Ringkanals in dem Ventilgehäuse angeordnet. Hierzu ist es ferner von Vorteil, wenn das Kolbengehäuse an seiner dem Kolben abgewandten Stirnseite nach Art eines Kegels schlank zuläuft. Die radialen Stützstege weisen hierbei vorzugsweise einen strömungstechnisch optimierten Querschnitt, beispielsweise in Tropfenform, auf, und führen daher allenfalls zu einem vernachlässigbaren Strömungswiderstand innerhalb des Ringkanals. Durch die Ausbildung der Stirnseite des Kolbengehäuses nach Art eines Kegels, einer Kugelkappe oder dgl. läßt sich der dort bei geöffnetem Auslaßventil wirkende Staudruck begrenzen.

In mindestens einem der Stützstege ist ein Kanal ausgebildet, über den das Kolbengehäuse mit einem schaltbaren 3/2-Wegeventil in Verbindung steht. Die Stützstege übernehmen also neben ihrer Funktion einer Abstützung des Kolbengehäuses innerhalb des Ventilgehäuses zusätzlich die Funktion einer Verbindungsleitung zu dem 3/2-Wegeventil. Durch Schalten des 3/2-Wegeventils in seine Entlüftungsstellung wird das Kolbengehäuse entlüftet, wodurch nunmehr die im Bereich der Ventildichtfläche angreifende, hochkomprimierte Luft die Druckwirkung auf den Kolben bestimmt und diesen schlagartig bis zur Freigabe des Ventilquerschnittes zurückschlägt.

Die Strömungsverhältnisse innerhalb des Auslaßventiles lassen sich weiter verbessern, wenn der Ringkanal allseitig unter einem Mündungswinkel von 25 bis 75° zur Kolbenlängsachse in die Ausströmdüse mündet.

In diesem Fall ist es ferner von Vorteil, wenn die Ventildichtfläche oder/und ein damit zusammenwirkender Ventilsitz unter dem Mündungswinkel angeschrägt ist/sind.

Eine einfache Anpassung der Luftkanone an veränderte Betriebserfordernisse ist möglich, indem der mit der Ventildichtfläche am Kolben zusammenwirkende Ventilsitz an einem Flansch ausgebildet ist, der auswechselbar an dem Ventilgehäuse angeordnet ist. Durch Auswahl eines entsprechenden Flansches läßt sich in diesem Fall die Größe der Ausströmöffnung und damit die Stärke des Luftimpulses vorgeben. Außerdem läßt sich nach vorheriger Entfernung des Flansches der Kolben leicht auswechseln.

Mit der Erfindung wird ferner vorgeschlagen, daß an dem Flansch ein die Austrittsdüse umschließender Düsenkörper befestigbar ist.

Von Vorteil ist, wenn das Ventilgehäuse eine koaxial zur Kolbenlängsachse ausgerichtete Einlaßöffnung aufweist, die sich innerhalb des Ventilgehäuses zu dem Ringkanal aufweitet. Hierdurch wird eine symmetrische und allseitige An-, Um- und Abströmung des Auslaßventils und damit eine besonders verlustarme Strömungsführung erreicht.

Bei einer bevorzugten Ausgestaltung der Erfindung wird vorgeschlagen, daß Kolben und zugehöriges Kolbengehäuse bis auf die erforderlichen Materialstärken hohl ausgebildet sind und ein gemeinsames Speichervolumen bilden. Der Vorteil dieses Speichervolumens besteht darin, daß geringe Leckverluste der auf die Rückseite des Kolbens einwirkenden Luft noch nicht zu einem gefährlichen Abfall des Schließdruckes führen, was zu einem sofortigen Öffnen des Auslaßventiles und damit zur Abgabe eines unkontrollierten Luftstoßes führen würde. Zur Erhöhung der Sicherheit der Luftkanone wird ferner gemäß einer Ausgestaltung ein Differenzdruckventil vorgeschlagen, welches bei Überschreiten einer vorgegebenen Druckdifferenz zwischen dem Druck in dem Druckbehälter und dem auf der Rückseite des Kolbens wirkenden Schließdruck den Druck im Druckbehälter reduziert. Hierdurch ist sichergestellt, daß der auf der Rückseite des Kolbens wirkende Schließdruck jederzeit den an der Vorderseite des Kolbens angreifenden Druck in dem Druckbehälter übersteigt, so daß der Kolben nicht zurückschlagen und unbeabsichtigt das Auslaßventil freigeben kann.

Schließlich ist eine Ausgestaltung der Erfindung gekennzeichnet durch eine im Kolbengehäuse angeordnete Luftpolster-Dämpfung zur Dämpfung der Bewegung des Kolbens. Hierdurch wird die auf dem Kolben sowie das Kolbengehäuse einwirkende mechanische Belastung erheblich reduziert und damit ein dauerhafter und sicherer Betrieb der Luftkanone sichergestellt.

Weitere Einzelheiten und Vorteile des Gegenstandes der Erfindung ergeben sich aus der nachfolgenden Beschreibung der zugehörigen Zeichnungen, in denen eine bevorzugte Ausführungsform der erfindungsgemäßen Luftkanone dargestellt ist. In den Zeichnungen zeigen:
- Fig. 1: in einer teilweise geschnittenen Draufsicht die Anordnung und Befestigung einer Luftkanone am äußeren Mantel eines Schüttgutbehälters und
- Fig. 2: in einer teilweise geschnittenen Darstellung das Auslaßventil der Luftkanone nach Fig. 1 zusammen mit einem Schaltbild der Ansteuerung des Auslaßventils.

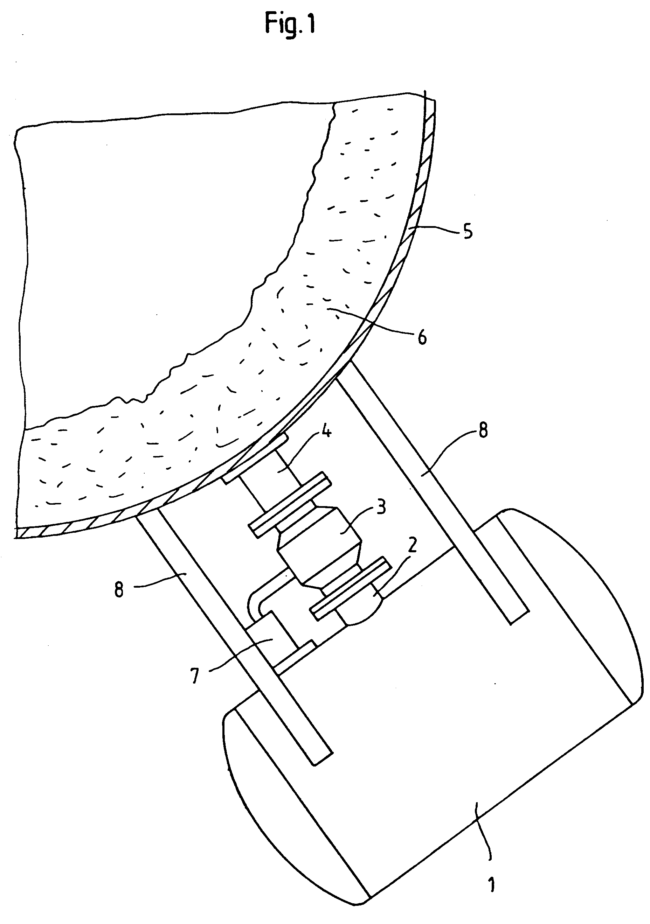

Die in Fig. 1 dargestellte Luftkanone besteht aus einem komprimierte Luft enthaltenden Druckbehälter 1, an dem über ein rohrförmiges Zwischenstück 2 ein Auslaßventil 3 mittels Flanschverbindungen befestigt ist. Ein Düsenkörper 4 führt vom Auslaßventil ins Innere eines Schüttgutbehälters 5. Dort an der Innenseite haftende Schüttgutanbackungen 6 werden durch impulsartig aus dem Düsenkörper 4 abgegebene Luftstöße der Luftkanone entfernt. Die Betätigung des Auslaßventils 3 erfolgt über eine Steuereinrichtung 7, die auf dem Mantel des Druckbehälters 1 befestigt ist. Der Druckbehälter 1 ist mittels Stützen 8 am äußeren Mantel des Schüttgutbehälters 5 befestigt. Andere Befestigungen, etwa durch Abhängen an Stahldrähten, sind ebenfalls möglich.

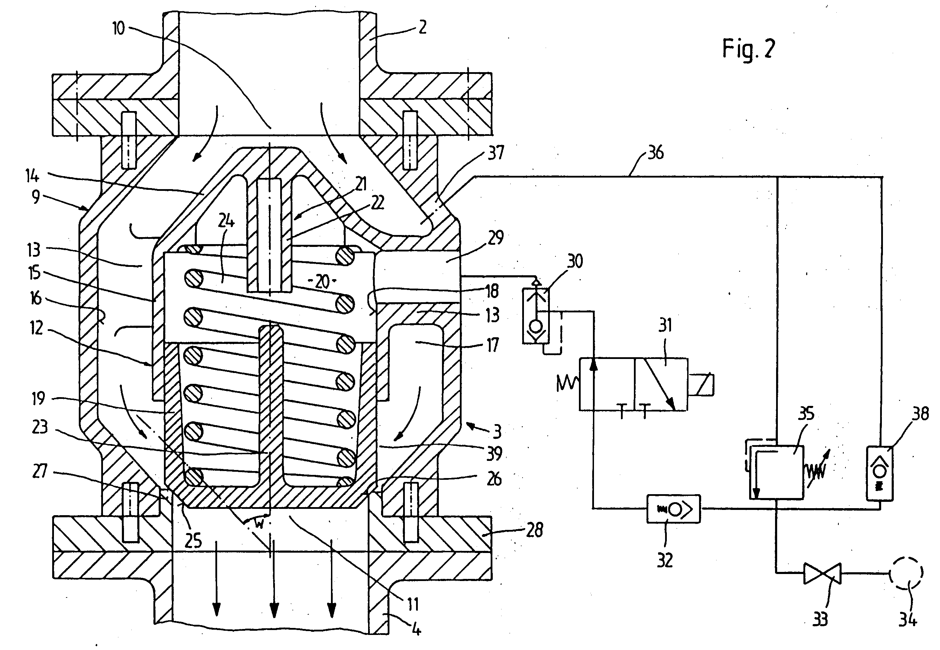

Einzelheiten des Auslaßventils 3 sind im linken Teil der Fig. 2 dargestellt. Das Auslaßventil 3 besteht unter anderem aus einem Ventilgehäuse 9 mit einer Einlaßöffnung 10 und einer Auslaßöffnung 11, welche zugleich eine Ausströmdüse für die über das rohrförmige Zwischenstück 2 vom Druckbehälter 1 zugeführte, komprimierte Luft bildet. Der größte Teil der Ausströmdüse 11 wird durch den stromabwärts befestigten Düsenkörper 4 gebildet.

Das Ventilgehäuse 9 besteht aus einem einstückigen Gußteil, in dem zentrisch zur Längsachse des Ventilgehäuses 9 ein Kolbengehäuse 12 ausgeformt ist. Das Kolbengehäuse 12 befindet sich koaxial innerhalb des Ventilgehäuses 9 und ist mit diesem über fest angegossene, radial angeordnete Stützstege 13 verbunden. Das Kolbengehäuse 12 ist an seiner in Fig. 2 nach oben weisenden Stirnseite nach Art eines Kegels 14 geformt, an den sich ein zylindrischer Abschnitt 15 anschließt. Die Innenwandung 16 des Ventilgehäuses 9 ist so geformt, daß sie der äußeren Form des Kolbengehäuses 12 weitgehend folgt, wodurch sich zwischen Ventilgehäuse 9 und Kolbengehäuse 12 ein Ringkanal 17 mit über dem Umfang gleichmäßiger Querschnittsfläche ergibt. Der durch den Ringkanal 17 gebildete Strömungsquerschnitt wird allenfalls durch die nach Art von Strömungsprofilen geformten Stützstege geringfügig beeinträchtigt. Um den Einfluß hieran eventuell entstehender Verwirbelungen auf das Strömungsverhalten im Bereich der Ausströmdüse 11 möglichst gering zu halten, befinden sich die Stützstege 13 im in Fig. 2 oberen, der Ausströmdüse 11 abgewandten Bereich des Ventilgehäuses 9.

Die Innenwand des Kolbengehäuses 12 ist im Bereich des zylindrischen Abschnitts 15 mit einer Führung 18 versehen, an der ein Kolben 19 axial gleiten kann. Der Kolben 19 ist topfförmig ausgebildet, wobei sein Hohlraum zusammen mit dem Innenraum des Kolbengehäuses 12 ein gemeinsames Speichervolumen 20 bildet. Zur Erzielung eines möglichst großen Speichervolumens 20 sind die Materialstärken von Kolben 19 und Kolbengehäuse 12 auf das notwendige Minimum reduziert.

Innerhalb des Kolbengehäuses 12 ist eine Luftpolster-Dämpfung 21 angeordnet, die aus einem Dämpfungszylinder 22 und einem damit zusammenwirkenden Dämpfungskolben 23 besteht. Rückseitig, d.h. der Einlaßöffnung 10 zugewandt, liegt an dem Kolben 19 eine Druckfeder 24 an, die bestrebt ist, den Kolben 19 in seiner Schließstellung zu halten.

An der der Ausströmdüse 11 zugewandten Vorderseite des Kolbens 19 ist dieser mit einer ringförmigen Ventildichtfläche 25 versehen, die eine Anschrägung von 45° aufweist. Eine entsprechende Anschrägung findet sich an dem mit der Ventildichtfläche 25 zusammenwirkenden Ventilsitz 26. Der Ventilsitz 26 ist an einem mit einem Kragen 27 in das Ventilgehäuse 9 hineinragenden Flansch 28 angeformt. Hierbei ist der Außendurchmesser des Kragens 27 geringfügig größer als der Durchmesser der Führung 18 sowie des Kolbens 19, so daß bei Montagearbeiten nach Abnehmen des Flansches 28 der Kolben 19 aus dem Ventilgehäuse 9 herausgezogen werden kann.

Rund um den Ventilsitz 26 ist die Innenwandung 16 bzw. der Ringkanal 17 des Ventilgehäuses 9 allseitig unter einem Mündungswinkel w von etwa 45° zur Kolbenlängsachse geneigt, so daß die bei offenem Ventil über den Ringkanal 17 zu strömende Luft unter etwa dem gleichen Winkel w in die Ausströmdüse 11 gelangt. Hierbei entstehen infolge der kleinen Umlenkungswinkel nur geringe Strömungsverluste.

Das Speichervolumen 20 ist über einen Kanal 29 in einem Stützsteg 13 und über ein Schnellentlüftungsventil 30 mit einem 3/2-Wegeventil 31 verbunden. Das 3/2-Wegeventil 31 ist in seiner in Fig. 2 dargestellten Normalstellung über ein Rückschlagventil 32 und eine Drossel 33 mit einer Druckquelle 34 verbunden. Ferner ist ein Druckregelventil 35 zwischen der Druckquelle 34 und dem die komprimierte Luft enthaltenden Druckraum vorgesehen. Die betreffende Leitung 36 mündet beim Ausführungsbeispiel über eine Füllbohrung 37 in den Ringkanal 17; sie kann aber ebenso unmittelbar in den Druckbehälter 1 führen.

Parallel zu dem Druckregelventil 35 ist ein Differenzdruckventil 38 geschaltet.

Die Luftkanone arbeitet auf die folgende Art und Weise:

Zum Befüllen des Druckbehälters 1 wird die von der Druckquelle 34 bereitgestellte Druckluft über das 3/2-Wegeventil 31 zunächst in das Speichervolumen 20 geführt. Dies führt zusammen mit der Schließkraft der Druckfeder 24 zu einem Verschieben des Kolbens 19 in seine in Fig. 2 dargestellte Schließstellung. Zugleich wird über das Druckregelventil 35 und die Füllbohrung 37 der Druckbehälter 1 bis zum Erreichen des gewünschten Drucks gefüllt. Der Kolben 19 verharrt hierbei von selbst in seiner Schließstellung, da die auf die Rückseite des Kolbens 19 einwirkende Kraft größer ist als die auf seine Vorderseite einwirkende Kraft. Denn während die Rückseite dem Schließdruck innerhalb des Speichervolumens 20 unterliegt, wird die Vorderseite des Kolbens 19 nur in dem Bereich außerhalb der wirksamen Ventildichtfläche 25 von dem im Druckbehälter 1 herrschenden Druck beaufschlagt, während der innerhalb liegende Bereich lediglich dem Atmosphärendruck in der Ausströmdüse 11 unterliegt. In der Summe ergibt sich eine in Schließrichtung wirkende Kraft auf den Kolben 19.

Diese Schließkraft wird auch bei geringfügigen Leckverlusten, etwa im Bereich des Schnellentlüftungsventils 30 oder des 3/2-Wegeventils 31, aufrechterhalten, da der Schließdruck infolge des relativ großen Speichervolumens 20 nur langsam absinkt. Ferner stellt das Differenzdruckventil 38 sicher, daß der Druck im Speichervolumen 20 nicht unter den Druck im Druckbehälter 1 fällt.

Durch Öffnen des 3/2-Wegeventils 31 kann die im Speichervolumen 20 gespeicherte Luft schlagartig entweichen, wodurch sich die vorgenannte Kräftebilanz am Kolben 19 umkehrt. Schlagartig bewegt der an der Vorderseite des Kolbens 19 wirkende Druck im Druckbehälter 1 den Kolben 19 in seine rückwärtige Stellung, so daß die im Druckbehälter 1 gespeicherte Luft schlagartig über die dann freiwerdende, vollständig zylindrische Öffnung 39 in die Ausströmdüse 11 austreten kann. Hierbei treten nur sehr geringe Druckverluste auf, so daß insgesamt ein impulsstarker Luftstoß zur Entfernung der Schüttgutanbackungen 6 erzeugt wird.

### Bezugszeichenliste

- 1: Druckbehälter
- 2: rohrförmiges Zwischenstück
- 3: Auslaßventil
- 4: Düsenkörper
- 5: Schüttgutbehälter
- 6: Schüttgutanbackung
- 7: Steuereinrichtung
- 8: Stütze
- 9: Ventilgehäuse
- 10: Einlaßöffnung
- 11: Ausströmdüse
- 12: Kolbengehäuse
- 13: Stützsteg
- 14: Kegel
- 15: zylindrischer Abschnitt
- 16: Innenwandung
- 17: Ringkanal
- 18: Führung
- 19: Kolben
- 20: Speichervolumen
- 21: Luftpolster-Dämpfung
- 22: Dämpfungszylinder
- 23: Dämpfungskolben
- 24: Druckfeder
- 25: Ventildichtfläche
- 26: Ventilsitz
- 27: Kragen
- 28: Flansch
- 29: Kanal
- 30: Schnellentlüftungsventil
- 31: 3/2-Wegeventil
- 32: Rückschlagventil
- 33: Drossel
- 34: Druckquelle
- 35: Druckregelventil
- 36: Leitung
- 37: Füllbohrung
- 38: Differenzdruckventil
- 39: Öffnung
- w: Mündungswinkel

## Patentansprüche

1. Luftkanone zur Beseitigung von Schüttgutanbackungen und -stauungen in Silos, Wärmetauschern, Leitungen und dgl. mit Hilfe von Luftstößen, mit einem Druckbehälter (1) zum Speichern von komprimierter Luft, einer Ausströmdüse (11) sowie einem zwischen dem Druckbehälter (1) und der Ausströmdüse (11) angeordneten Auslaßventil für die komprimierte Luft, wobei das Auslaßventil ein Ventilgehäuse (9) sowie einen in einer Führung (18) längsgeführten, rückseitig von einem schlagartig absenkbaren Schließdruck beaufschlagten Kolben (19) aufweist, der an seiner der Ausströmdüse (11) zugewandten Vorderseite eine ringförmige Ventildichtfläche (25) aufweist, innerhalb welcher bei geschlossenem Auslaßventil der Druck in der Ausströmdüse (11) und außerhalb welcher der im Druckbehälter (1) herrschende Druck wirkt,
**dadurch gekennzeichnet,**
daß zwischen dem Ventilgehäuse (9) und einem an seiner Innenwand mit der Führung (18) versehenen Kolbengehäuse (12) ein mit dem Druckbehälter (1) in Verbindung stehender Ringkanal (17) ausgebildet ist, der bei geöffnetem Auslaßventil in Form einer vollständig zylindrischen Öffnung (39) in die Ausströmdüse (11) mündet,
daß das Kolbengehäuse (12) über radiale Stützstege (13) und unter Wahrung des Ringkanals (17) in dem Ventilgehäuse (9) angeordnet ist,
daß eine Leitung (36) von einer komprimierte Luft erzeugenden Druckquelle (34) zu dem Druckbehälter (1) führt,
und daß eine weitere Leitung von der Druckquelle (34) zu einem Speichervolumen (20), das durch den Hohlraum an der Rückseite des Kolbens (19) zusammen mit dem Innenraum des Kolbengehäuses (12) gebildet wird, führt, wobei diese weitere Leitung über einen Kanal (29) in das Speichervolumen (20) mündet, welcher Kanal (29) in mindestens einem der Stützstege (13) ausgebildet ist, und wobei in der weiteren Leitung ein schaltbares 3/2-Wegeventil (31) angeordnet ist, welches
a) in seiner Normalstellung die Druckquelle (34) mit dem Speichervolumen (20) verbindet und
b) in seiner Entlüftungsstellung einen Querschnitt freigibt, über den komprimierte Luft aus dem Speichervolumen (20) entweichen kann.

2. Luftkanone nach Anspruch 1, dadurch gekennzeichnet, daß das Kolbengehäuse (12) innerhalb des Ventilgehäuses (9) einen nahezu symmetrisch angeordneten Strömungskörper bildet.

3. Luftkanone nach Anspruch 2, dadurch gekennzeichnet, daß das Kolbengehäuse (12) an seiner dem Kolben (19) abgewandten Stirnseite nach Art eines Kegels (14) schlank zuläuft.

## Claims

1. Air gun for removing caking and accumulations of bulk material in hoppers, heat exchangers, lines and the like with the aid of air surges, having a pressure vessel (1) for storing compressed air, a discharge nozzle (11) and an outlet valve, arranged between the pressure vessel (1) and the discharge nozzle (11), for the compressed air, the outlet valve having a valve housing (9) and a piston (19) which is guided longitudinally in a guide (18), is pressurized at the rear by a closure pressure which can be dropped abruptly, and has, on its front side facing the discharge nozzle (11), an annular valve sealing surface (25) inside which the pressure in the discharge nozzle (11) acts when the outlet valve is closed, and outside which the pressure prevailing in the pressure vessel (1) acts, characterized in that an annular channel (17) is formed between the valve housing (9) and a piston housing (12) provided on its inner wall with the guide (18), which annular channel communicates with the pressure vessel (1) and opens, in the form of a completely cylindrical opening (39), into the discharge nozzle (11) when the outlet valve is open, in that the piston housing (12) is arranged in the valve housing (9) by means of radial supporting webs (13) whilst keeping the annular channel (17), in that a line (36) leads to the pressure vessel (1) from a pressure source (34) which produces compressed air, and in that a further line leads from the pressure source (34) to a storage volume (20) which is formed by the hollow space at the back of the piston (19) together with the interior of the piston housing (12), the said further line opening via a channel (29) into the storage volume (20), which channel (29) is formed in at least one of the supporting webs (13), and a switchable 3/2-way valve being arranged in the further line, which valve
a) connects the pressure source (34) to the storage volume (20) in its normal position and
b) in its venting position, exposes a cross-section, via which compressed air can escape from the storage volume (20).

2. Air gun according to Claim 1, characterized in that the piston housing (12) forms an almost symmetrically arranged flow body inside the valve housing (9).

3. Air gun according to Claim 2, characterized in that the piston housing (12) tapers in the manner of a cone (14) at its end face remote from the piston (19).

## Revendications

1. Canon à air pour éliminer de la matière adhérente et accumulée dans des silos, des échangeurs thermiques, des conduites et équivalents, à l'aide de coups de souffle, avec un réservoir d'air comprimé (1), destiné à stocker de l'air comprimé, une tuyère d'évacuation (11), ainsi qu'une soupape d'échappement pour l'air comprimé, disposée entre le réservoir d'air comprimé (1) et la tuyère d'évacuation (11), dans lequel la soupape d'échappement comporte une boîte de soupape (9), ainsi qu'un piston (19) introduit longitudinalement dans un guide (18), mis en mouvement par une pression de fermeture à l'arrière à déplacement vers le bas par à-coups, qui présente, au niveau de sa face avant orientée vers la tuyère d'évacuation (11), une surface d'étanchéité de soupape (25) circulaire, à l'intérieur de laquelle, en position fermée de la soupape d'échappement, la pression agit dans la tuyère d'évacuation (11), et à l'extérieur de laquelle, la pression présente agit dans le réservoir d'air comprimé (1),
caractérisé en ce que,
entre la boîte de soupape (9) et un logement du piston (12) doté au niveau de sa paroi intérieure du guide (18), un canal circulaire (17) est formé, relié au réservoir d'air comprimé (1), qui, en position d'ouverture de la soupape d'échappement, débouche dans la tuyère d'évacuation (11) sous forme d'une ouverture totalement cylindrique (39), en ce que le logement du piston (12) est monté dans la boîte de soupape (9) sur des entretoises de ventilation (13) et sous protection du canal circulaire (17), en ce qu'une conduite (36) mène d'une source de pression (34) produisant de l'air comprimé au réservoir d'air comprimé (1), et en ce qu'une conduite supplémentaire mène à un volume de stockage (20), qui est formé par l'espace creux à l'arrière du piston (19) conjointement avec l'espace intérieur du logement de piston (12), cette conduite supplémentaire débouchant par un canal (29) dans le volume de stockage (20), lequel canal (29) étant conçu dans au moins une des entretoises de ventilation (13), une soupape 3/2 voies 31 pouvant être commutée étant montée dans la conduite supplémentaire, qui
a) dans sa position normale, relie la source de pression (34) au volume de stockage (20) et qui
b) dans sa position de purge d'air, libère une section transversale, à travers laquelle l'air comprimé peut s'échapper du volume de stockage (20).

2. Canon à air selon la revendication 1, caractérisé en ce que le logement de piston (12) à l'intérieur de la boîte de soupape (9) constitue un corps hydraulique disposé de façon quasiment symétrique.

3. Canon à air selon la revendication 2, caractérisé en ce que le logement de piston (12) se termine de façon allongée au niveau de sa face avant opposée au piston (19) à la façon d'un cône (14).
